(19) Europäisches Patentamt
European Patent Office
Office européen des brevets

(11) Publication number: 0 064 355 A1

# (12) EUROPEAN PATENT APPLICATION

(21) Application number: 82302020.1

(22) Date of filing: 20.04.82

(51) Int. Cl.³: C 01 B 17/04

(30) Priority: 21.04.81 US 256216

(43) Date of publication of application: 10.11.82 Bulletin 82/45

(84) Designated Contracting States: DE FR GB IT NL SE

(71) Applicant: FOSTER WHEELER ENERGY CORPORATION
110 South Orange Avenue
Livingston New Jersey 07039(US)

(72) Inventor: Steiner, Peter
10 Farmhaven Avenue
Edison New Jersey(US)

(72) Inventor: Gutterman, Carl
4 Limoli Court
Edison New Jersey(US)

(74) Representative: Baldock, Hugh Charles et al,
Lloyd Wise, Tregear & Co. Norman House 105-109 Strand
London, WC2R 0AE(GB)

## (54) Process for the reduction of sulphur dioxide.

(57) The invention relates to the reduction of sulfur dioxide ($SO_2$) to elemental sulfur in a two-stage method. In the first stage (1), a mixture of steam and $SO_2$ is fed to a reactor and contacted with coal under conditions suitable to generate a mixture of hydrogen sulfide ($H_2S$) and $SO_2$ in a molar ratio of, or in excess of substantially 2:1 and some elemental sulfur. In the second stage (2), a molar ratio of substantially 2:1 is established in the gaseous mixture; and the mixture is contacted with a catalyst under conditions suitable for the release of elemental sulfur therefrom.

FIG. 1

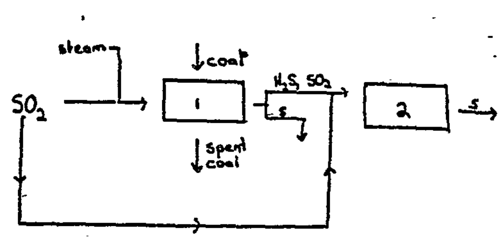


EP 0 064 355 A1

Croydon Printing Company Ltd.

/

Techniques for the reduction of sulfur dioxide ($SO_2$) to elemental sulfur have long been known in the art. One well known method is the "Claus method". In the Claus method, $SO_2$ and hydrogen sulfide ($H_2S$) are catalytically converted to elemental sulfur. Typically, this is done by a multi-stage process. In the initial stages, $SO_2$ is reduced to $H_2S$. The $H_2S$ is then reacted with more $SO_2$ in the presence of a bauxite or an alumina catalyst at a temperature of from about 350° to about 700° F to form sulfur via the familiar Claus reaction:

$$2H_2S + SO_2 \xrightarrow{\text{catalyst, } \Delta} 3S + 2H_2O$$

The latter stage takes place in what is known as a Claus converter. U.S. Patents Nos. 2,270,427, 2,388,259, 2,431,236, 4,039,650, and 4,117,101 describe this process and variations thereof, each of these patents are hereby incorporated by reference. A major disadvantage of this process today is that it requires relatively expensive natural gas as the reducing agent.

A second method is the so called "Resox process." This process for reducing $SO_2$ to elemental sulfur with coal is described in U.S. Patent No. 4,147,762, and in Steiner, et al. <u>Removal and Reduction of Sulfur Dioxides from Polluted Gas Streams</u>, 15 American Chemical Society's Advances in Chemistry Series, No. 139, at 180 (1975), both of which are hereby incorporated by reference. In this process, the $SO_2$ is first mixed with steam and then passed through a reactor containing the coal. The molar ratio of steam to $SO_2$ fed into the reactor and the temperature at which the reactor is maintained are selected to enhance the production of elemental sulfur. The process has two significant advantages: 1) relatively inexpensive high sulfur coal can be used as the reducing agent; and 2) the conversion

reaction can be conducted at temperatures that are substantially lower than those required in previously known coal conversion processes. There is however, an important disadvantage associated with this process, that is, the yield of elemental sulfur is lower than in the Claus method.

The present invention seeks to provide a process for reducing $SO_2$ to elemental sulfur which mitigates the abovementioned drawbacks and problems. More specifically, the invention seeks to provide such a process which uses coal, which is relatively inexpensive, as a reducing agent, and which will produce a yield of elemental sulfur equal to or better than that produced by known processes using relatively expensive natural gas as the reducing agent, for example a better yield rate than could be achieve in a standard Claus catalytic converter. In some respects, the invention combines features of the Claus method and the Resox process described above.

In accordance with a primary purpose of the invention, a

process for reducing $SO_2$ to elemental sulfur comprises the steps of: feeding a mixture of steam and $SO_2$ into a first reactor, and contacting the mixture with coal, the molar ratio of steam to $SO_2$ fed into the first reactor, the temperature of the first reactor, and the residence time in said first reactor being suitable for the production of a product having a molar ratio of $H_2S$ to $SO_2$ in excess of 2/1; withdrawing elemental sulfur, $H_2S$, and $SO_2$ from the first reactor; recovering the elemental sulfur; adding to the $H_2S$ and $SO_2$ from the first reactor additional $SO_2$ such that the molar ratio of $H_2S$ to $SO_2$ is approximately 2/1; feeding the mixture of $H_2S$ and $SO_2$ to a second reactor; contacting the mixture of $H_2S$ and $SO_2$ in the second reactor with a suitable catalyst, and at a suitable temperature, to form elemental sulfur; and withdrawing the elemental sulfur from the second reactor.

To further achieve the objects, and in accordance with the purpose of the invention, as embodied and broadly described herein, a process for reducing $SO_2$ to elemental sulfur comprises the steps of: feeding a mixture of steam and $SO_2$ into a first reactor, and contacting the mixture with coal, the molar ratio of steam to $SO_2$ fed into the first reactor, the temperature of the first reactor, and the residence time in said first reactor being suitable for the production of a product having a molar ratio of $H_2S$ to $SO_2$ of approximately 2/1; withdrawing elemental sulfur, $H_2S$, and $SO_2$ from the first reactor; recovering the elemental sulfur; feeding the mixture of $H_2S$ and $SO_2$ from the first reactor to a second reactor; contacting the mixture of $H_2S$ and $SO_2$ in the second reactor with a suitable catalyst, and at a suitable temperature to form elemental sulfur; and withdrawing the elemental sulfur from the second reactor.

The foregoing and other objects, features, and advantages of the present invention will be made more apparent from the following description of the preferred embodiments. The accompanying drawings, which are incorporated in and constitute a part of this specification, illustrate the preferred embodiments of the invention, and, together with the description serve to explain the principles of the invention.

FIG. 1 is a schematic block diagram representing a first embodiment of the invention.

FIG. 2 is a schematic block diagram representing the preferred embodiment of the invention.

Reference will now be made in detail to the present preferred embodiments of the invention, examples of which are illustrated in the accompanying drawings.

In accordance with the invention, a first embodiment of the process for reducing $SO_2$ to elemental sulfur is illustrated in Fig. 1. As embodied herein, $SO_2$ is mixed with a suitable amount of steam, and introduced into reactor 1 where it is contacted with a coal bed for a suitable amount of time, reactor 1 being maintained at a suitable temperature. As a result, $SO_2$ is reduced to elemental sulfur and $H_2S$, and the coal is oxidized. U.S. Patent No. 4,147,762, and the Steiner, et al. article cited above describe material and apparatus suitable for performing this stage of the process.

The sulfur, the $H_2S$, and any unreduced $SO_2$ are withdrawn from reactor 1. The sulfur is recovered. To the remaining $H_2S/SO_2$ mixture, additional $SO_2$ is added, such that the molar ratio of $H_2S$ to $SO_2$ is approximately 2:1. This mixture is then

fed into reactor 2, a Claus converter, for conversion to sulfur in accordance with the well-known Claus reaction. (The Claus converter is operated at standard conditions.) Lastly, elemental sulfur is withdrawn from the Claus converter.

The molar ratio of steam to $SO_2$ introduced into reactor 1 ($H_2O/SO_2$ ratio), the temperature at which reactor 1 is maintained, and the residence time for reactor 1 are selected to enhance the production of $H_2S$, such that the product gas from reactor 1 contains more than two moles of $H_2S$ per mole of $SO_2$. By selecting an appropriate temperature and residence time, satisfactory results are expected with $H_2O/SO_2$ ratios of from 1 to 6. The desired results have been obtained with $H_2O/SO_2$ ratios ranging from 1.4 to 4.2. It is expected that most preferably, $H_2O/SO_2$ ratios of from 2 to 4 should be used. The appropriate temperature required is dependent on the volatility of the coal used in the coal bed. (Of course, the appropriate temperature also depends on the $H_2O/SO_2$ ratio and the residence time.) The word "coal", as used in this application, means anthracite coal, bituminous coal, coke, or any solid materials containing a sufficiently high carbon content as to produce the desirable reaction. When using anthracite coal: satisfactory results are expected with temperatures of from 1300° F to 1700° F; the desired results have been obtained with temperatures ranging from 1390° F to 1556° F and it is expected that most preferably, temperatures of from 1400° F to 1600° F should be used. When using a more volatile coal, correspondingly lower temperatures can be used. Determination of such temperatures is within the skill of one of ordinary skill in the art. It is expected that the residence time for reactor 1 may be from 2 to 12 seconds. Satisfactory results were achieved with a residence times ranging from 2.9 to

9.2 seconds (adjusted for coal consumption). But preferably it is expected that a residence time of from 4 to 8 should be used.

Example 1 illustrates appropriate $H_2O/SO_2$ ratios, temperatures, and residence times for enhancing the production of $H_2S$ such that the product gas from reactor 1 contains more than two moles of $H_2S$ per mole of sulfur dioxide.

Example 1

The following compilation of data was obtained from operating a bench scale Resox pilot reactor consisting of a one inch I.D. quartz tube equipped with immersion and skin thermocouples and inserted into a vertical electric furnace of approximately 22 inches of heated length. An 11.7 inch high bed of crushed anthracite coal (thru #6, on #14 Mesh) from Lehigh Valley Coal Company was placed in the tube and supported by a stainless steel screen. The location of the coal bed with respect to the heated length of the furnace was chosen to allow six inches of heated length for the preheat section.

The feed gases, $N_2$ and $SO_2$, were flow controlled with two independent rotameters. The dry gases were fed to the humidifier which consisted of a heated flask charged with water and equipped with an immersion thermometer. The proper amount of humidity was maintained by bubbling the gases through the water at a controlled temperature. The system pressure was measured by a manometer located between the feed rotometers and the humidifier.

With the system pressure maintained at 1-2" Hg, the product gases were fed continuously to a flow-through gas syringe that was used to inject samples directly into gas chromatographs. A series of samples were thus taken. When steady state was achieved, these analyses were averaged and correlated with the remaining data.

This bench scale Resox pilot reactor is illustrated in Fig. 1 of U.S. Patent No. 4,147,762, and is further described at Col. 2, lines 4-68 of that patent.

0064355

8

SUMMARY OF RESULTS

| RUN | 1 | 2 | 3[4/5/] | 4A[3/6/] | 4B | 5A[3/7/] | 5B[3/] | 5C[3/] |
|---|---|---|---|---|---|---|---|---|
| FEED - SCFH at 60°F | | | | | | | | |
| $SO_2$ | 0.110 | 0.110 | 0.110 | 0.110 | 0.110 | 0.169 | 0.169 | 0.254 |
| $N_2$ | 0.365 | 0.300 | 0.300 | 0.300 | 0.300 | 0.300 | 0.300 | 0.205 |
| $H_2O$ | 0.210 | 0.157 | 0.273 | 0.460 | 0.430 | 0.349 | 0.372 | 0.368 |
| TOTAL | 0.685 | 0.567 | 0.683 | 0.870 | 0.840 | 0.818 | 0.841 | 0.827 |
| FEED - Wet Mol.% | | | | | | | | |
| $SO_2$ | 16.1 | 19.4 | 16.1 | 12.6 | 13.1 | 20.6 | 20.1 | 30.7 |
| $N_2$ | 53.2 | 52.9 | 43.9 | 34.5 | 35.7 | 36.6 | 35.7 | 24.8 |
| $H_2O$ | 30.7 | 27.7 | 40.0 | 52.9 | 51.2 | 42.8 | 44.2 | 44.5 |
| TOTAL | 100 | 100 | 100 | 100 | 100 | 100 | 100 | 100 |
| TEMPERATURES - °F | | | | | | | | |
| 1/3 Coal Bed-Immersion | 1495 | 1480 | 1502 | 1435 | 1483 | 1504 | 1556 | 1545 |
| 2/3 Coal Bed-Immersion | 1470 | 1470 | 1470 | 1420([2/]) | 1470 | 1475 | 1525 | 1525 |
| 1/2 Coal Bed-Skin | 1510 | 1437 | 1454 | 1390 | 1433 | 1439 | 1510 | 1500 |
| Mol. Ratio $H_2O/SO_2$ | 1.91 | 1.43 | 2.48 | 4.18 | 3.91 | 2.07 | 2.20 | 1.45 |
| Product Gas - SCFH at 60°F | 0.739 | 0.532 | 0.590 | 0.494 | 0.609 | 0.693 | 0.810 | 0.747 |
| Expansion-Mol./Mol. (Dry Gas) | 1.556 | 1.298 | 1.439 | 1.205 | 1.485 | 1.478 | 1.727 | 1.627 |

| | | | | | | | | |
|---|---|---|---|---|---|---|---|---|
| Contact Time - Sec. (inlet gas volume & open tube) | 7.9 | 9.6 | 7.9 | 6.4 | 6.5 | 6.6 | 6.0 | 6.3 |
| Contact Time - Sec. (corrected for coal consump.)8/ | - | 9.2 | 6.8 | 4.9 | 4.7 | 4.3 | 3.4 | 2.9 |
| % of Coal Bed Consumed-At Run End -Cumulative (carbon consumption total charge) | - | 7.9 | 19.5 | 26.0 | 30.6 | 40.3 | 47.5 | 61.2 |

| | | | | | | | | |
|---|---|---|---|---|---|---|---|---|
| Product Gas Analysis - Mol.% | | | | | | | | |
| $N_2$ | 53.8 | 55.1 | 50.3 | 62.2 | 49.6 | 44.6 | 39.5 | 24.6 |
| $CO_2$ | 18.7 | 27.1 | 24.7 | 25.0 | 27.0 | 31.9 | 27.5 | 35.2 |
| COS | 0.7 | 3.3 | 1.8 | 2.0 | 1.4 | 2.7 | 1.7 | 4.8 |
| $H_2S$ | 12.5 | 10.5 | 15.7 | 7.1 | 16.0 | 14.9 | 17.2 | 21.6 |
| $CS_2$ | Nil | 0.6 | 0.5 | 0.3 | 0.2 | 0.8 | 0.1 | 0.8 |
| $SO_2$ | Nil | 3.4 | 1.0 | 1.8 | 1.1 | 2.7 | 1.7 | 6.0 |
| CO | 5.7 | Nil | 2.4 | 0.3 | 1.4 | 1.0 | 5.6 | 3.8 |
| $H_2$ | 8.6 | Nil | 3.6 | 1.3 | 3.3 | 1.4 | 6.7 | 3.2 |
| Carbon Consumption-gms/hr | 2.66 | 2.37 | 2.49 | 1.96 | 2.62 | 3.62 | 4.06 | 4.78 |
| Recovered Fraction - Oxygen from Feed $H_2O$ In Prodct Gas 1/ | 0.495 | 0.777 | 0.396 | 0.122 | 0.323 | 0.479 | 0.522 | 0.467 |
| Recovered Fraction - Hydrogen In Product Gas 1/ | 0.743 | 0.356 | 0.417 | 0.090 | 0.273 | 0.324 | 0.520 | 0.503 |
| Molar Ratio of H2S to SO2 in Product Gas | - | 3.1 | 15.7 | 3.9 | 14.5 | 5.5 | 10.1 | 3.6 |

NOTES

1/ Oxygen and hydrogen from unreacted water not included.

ND = Not determined.

2/ Estimated (on-off controller reading 50°F high).

3/ Accumulation of $H_2O$ at outlet noted.

4/ No $H_2O$ accumulation at outlet.

5/ Humidity may have been low due to insufficient insulation.

6/ Large amount of solid sulfur formed.

7/ Significant amount of solid sulfur formed.

8/ The same coal bed was used for Runs 2 thru 5C. Initial coal charge was 112.8 gms.

In accordance with the invention, the preferred embodiment of the process for reducing $SO_2$ to elemental sulfur is illustrated in Fig. 2. As embodied herein, $SO_2$ is mixed with a suitable amount of steam, and introduced into reactor 1 where it is contacted with a coal bed for a suitable amount of time, reactor 1 being maintained at a suitable temperature. As a result, $SO_2$ is reduced to elemental sulfur and $H_2S$, and the coal is oxidized. U.S. Patent No. 4,147,762, and the Steiner, et al. article cited above describe material and apparatus suitable for performing this stage of the process.

The sulfur, the $H_2S$, and any unreduced $SO_2$ are withdrawn from reactor 1. The sulfur is recovered. The remaining gaseous mixture of $H_2S$ and $SO_2$ is fed into reactor 2, a Claus converter, for conversion to sulfur in accordance with the well-known Claus reaction. (The Claus converter is operated at standard conditions.) Lastly, elemental sulfur is withdrawn from the Claus converter.

An advantage of this preferred embodiment of the invention is that for a given amount of $SO_2$ the quantity of $H_2S$ fed into the Claus converter is reduced because a significant amount of $SO_2$ is reduced to sulfur in the first process step. As a result, for the same size Claus converter more $SO_2$ can be treated than in either the first embodiment of this invention or the Claus method. Thus, this embodiment makes more efficient use of the Claus converter than does either the first embodiment of this invention or the Claus method.

The molar ratio of steam to $SO_2$ introduced into reactor 1, the temperature at which reactor 1 is maintained, and the residence time for reactor 1 are selected so that the product gas from reactor 1 contains approximately two moles of $H_2S$ per mole of

$SO_2$, the stochiometric requirement for the Claus reaction. By selecting an appropriate temperature and residence time, satisfactory results are expected with $H_2O/SO_2$ ratios ranging from 1 to 6. The desired results have been obtained with $H_2O/SO_2$ ratios ranging from 1.4 to 3. It is expected that most preferably, $H_2O/SO_2$ ratios of from 2 to 4 should be used. The appropriate temperature is dependent on the volatility of the coal used in the coal bed. (Of course, the appropriate temperature also depends on the $H_2O/SO_2$ ratio and the residence time.) When using anthracite coal: satisfactory results are expected with temperatures of from 1300° F to 1700° F; the desired results have been obtained with temperatures ranging from 963° F to 1550° F. It is expected that most preferably, temperatures of from 1400° F to 1600° F should be used. As noted above, when using a more volatile coal, correspondingly lower temperatures can be used. Determination of such temperatures is within the skill of one of ordinary skill in the art. It is expected that the residence time for reactor 1 may be from 2 to 12 seconds. Satisfatory results were achieved with residence times ranging from 2.9 to 9.2 seconds. But preferably it is expected that a residence tir of from 4 to 8 should be used.

By selecting appropriate $H_2O/SO_2$ ratios, temperatures, and residence times a product gas containing approximately two mole of $H_2S$ per mole of $SO_2$ can be achieved, as is illustrated in Ru 2 of Example I, and Examples II, III, and IV.

## Example II

Example II illustrates an appropriate $H_2O/SO_2$ ratio, temperature, and residence time which may be used in accordance with the present invention to obtain a product gas from reactor 1 having a molar ratio of $H_2S$ to $SO_2$ of 2.1/1.

This data was obtained from operation of the Resox pilot reactor having a height of 6.33 ft., a cross-sectional area of 0.3171 sq. ft., and a volume of 2.0 cubic ft. The reactor had a coal bed moving at a rate of 2.25 lb. per hr., such that 2.0% of the bed was discharged per hour.

The coal used was anthracite coal mined in the Wyoming Valley Region of Pennsylvania and having the following approximate percentage weight analysis: moisture - 3.55%; volatile matter - 4.52%; fixed carbon - 81.85%; and ash - 10.08%.

Data:

SUMMARY OF RESULTS

| | |
|---|---|
| FEED - SCFH at 60° F. | 75.7 |
| $SO_2$ | 36.5 |
| $N_2$ | 36.8 |
| $CO_2$ | |
| Air (for bringing reactor to temp.) | |
| $H_2O$ | 225.5 |
| TOTAL | 374.5 |
| FEED - Wet Mol.% | |
| $SO_2$ | 20.2 |
| $N_2$ | 9.8 |
| $CO_2$ | 9.8 |
| Air | |
| $H_2O$ | 60.2 |
| TOTAL | 100.0 |

| | |
|---|---|
| Average Reaction Temperature - °F. | 1483 |
| Maximum Recorded Temperature - °F. | 1550 |
| Dry Product Gas - SCFH at 60°F. | 153.4 |
| Contact Time - Sec. (Based on inlet gas volume and open tube) | 9.1 |
| Product Gas Analysis - Mol.% | |
| $N_2$ | 23.8 |
| $CO_2$ | 62.8 |
| COS | 2.1 |
| $H_2S$ | 7.6 |
| $CS_2$ | 0.08 |
| $SO_2$ | 3.6 |

Thus, with a $H_2O/SO_2$ molar ratio of about 3.0, an average recorded temperature of 1483° F, a maximum recorded temperature of 1550° F, and a residence time of 9.1 seconds, 7.6 moles of $H_2S$ and 3.6 moles of $SO_2$ were produced, a molar ratio of $H_2S$ to $SO_2$ of 2.1/1.

This example is also reported in U.S. Patent No. 4,147,762 as Run 3 of Example II. (Column 7, lines 20-65.)

Example III

The following data was obtained from operating a pilot $SO_2$ reduction reactor having a height of 1.58 ft., a cross-sectional area of 0.3171 sq. ft., and a volume of 0.5 cubic ft. The reactor had a moving coal bed moving at a rate of 6.93 lb. per hr., such that 24.7% of the reaction bed moved per hour. Anthracite coal from Wyoming Valley Region, Pennsylvania was used, the coal containing 3.55 weight % moisture and 4.52 weight % volatile matter. With proper adjustments of conditions, one skilled in the art would be able to achieve approximately 2 moles of $H_2S$ per mole of $SO_2$.

## SUMMARY OF RESULTS

| | Lb/Hr | SCFH @ 60°F | Mol.% Wet | Mol.% Dry |
|---|---|---|---|---|
| Feed rates | | | | |
| $SO_2$ | 6.3 | 37.3 | 15.7 | 29.7 |
| N2 | 1.4 | 18.8 | 7.9 | 14.9 |
| $CO_2$ | 2.4 | 20.5 | 8.6 | 16.3 |
| Air | | | | |
| $N_2$ | 2.8 | 38.4 | 16.1 | 30.5 |
| $O_2$ | 0.8 | 10.3 | 4.3 | 8.2 |
| Misc. | --- | 0.5 | 0.2 | 0.4 |
| $H_2O$ | 5.3 | 112.1 | 47.2 | -- |
| TOTAL | | 237.9 | 100.0 | 100.0 |
| Mol. Ratio $H_2O/SO_2$ | 3.0 | | | |
| Temp-°F | Avg. | | | |
| Inlet | 1425 | | | |
| 1/4 Bed | (1/) | | | |
| 1/2 Bed | (1/) | | | |
| 3/4 Bed | (1/) | | | |
| Outlet | 1380 | | | |
| Averaged Reactor Pressure - psig | 5.0 | | | |
| Residence Time-Seconds Based on Open Volume & Avg. Temp. | 2.9 | | | |
| Product Gas Analysis - Mol.% | | | | |
| $N_2$ | 44.5 | | | |
| $CO_2$ | 47.0 | | | |
| COS | 2.1 | | | |
| $H_2S$ | 3.9 | | | |
| $CS_2$ | 0.0 | | | |
| $SO_2$ | 2.5 | | | |
| $H_2$ | ND | | | |
| CO | ND | | | |
| Product Gas-SCFH @ 60°F | 132.4 | | | |
| Molar Ratio of $H_2S$ to $SO_2$ in Product Gas | 1.6 | | | |

NOTE

(1/) Temperatures not known due to thermocouple failures.

Thus with a $H_2O/SO_2$ molar ratio of about 3.0, an average recorded inlet temperature of 1425° F, an average recorded outlet temperature of 1380° F, and a residence time of 2.9 seconds, 3.9 moles of $H_2S$ and 2.5 moles of $SO_2$ were produced, a molar ratio of $H_2S$ to $SO_2$ of 1.6/1.

Example IV

The following data was obtained from operating the Resox pilot reactor described in Example II. Hongay Anthracite Coal having the following percentage weight analysis was used:

| | |
|---|---|
| Fixed Carbon | 86.73 |
| Volatile Matter | 5.87 |
| Ash | 5.81 |
| Moisture | 1.59 |

Thermocouples were located at inlet, 1/4 bed, 1/2 bed, 3/4 bed and outlet. The reactor coal bed was moving at a rate of 5.97 lb. per hr., such that 6.0% of the bed was discharged per hour.

## SUMMARY OF RESULTS

| FEED RATES | Mol. % | Wt. % |
|---|---|---|
| $SO_2$ | 13.3 | 26.7 |
| $N_2$ | 29.4 | 25.9 |
| $CO_2$ | 9.0 | 12.5 |
| $H_2O$ | 26.6 | 15.1 |
| Control Air | 21.7 | 19.8 |
| Rate - $sft^3/h$ at 60°F | 396.5 | --- |
| - cg/s (lb/h) | --- | 418.6 (33.2 |
| Mol. Ratio $H_2O/SO_2$ | 2.0 | |
| Temp. °F | | |
| Inlet | 1045 | |
| 1/4 Bed | 1431 | |
| 1/2 Bed | 1372 | |
| 3/4 Bed | 1030 | |
| Outlet | 963 | |
| Average Reactor Pressure - psia | 15.8 | |
| Residence Time-Seconds Based on superficial velocity, average temp. & inlet composition | 6.2 | |
| Product Gas Analysis - Mol.% | | |
| $N_2$ | 59.9 | |
| CO | 0.35 | |
| $CH_4$ | 0.63 | |
| $CO_2$ | 30.8 | |
| $C_2H_4$ | --- | |
| $C_2H_6$ | --- | |
| COS | 2.15 | |
| $CS_2$ | 0.14 | |
| $H_2$ | 1.8 | |
| $SO_2$ | 1.55 | |
| $H_2S$ | 2.75 | |
| Rate - $sft^3/h$ at 60°F | 307.1 | |
| Molar Ratio of $H_2S$ to $SO_2$ in Product Gas | 1.77 | |

Thus, with a $H_2O/SO_2$ molar ratio of about 2.0, and temperatures varying from 963° F (outlet) to 1431° F (1/4 Bed), and residence time of 6.2 seconds, 2.75 moles of $H_2S$ and 1.55 moles of $SO_2$ were produced, a molar ratio of $H_2S$ to $SO_2$ of 1.77/1.

CLAIMS:-

1. A process for the reduction of $SO_2$ to elemental sulfur comprising the steps of:

feeding a mixture of steam and $SO_2$ into a first reactor, and contacting said mixture with coal, the molar ratio of steam to $SO_2$ fed into said first reactor, the temperature of said first reactor, being suitable for the production of a product having a molar ratio of $H_2S$ to $SO_2$ in excess of 2/1;

withdrawing elemental sulfur, $H_2S$, and $SO_2$ from said first reactor;

recovering said elemental sulfur;

adding to said $H_2S$ and $SO_2$ from said first reactor additional $SO_2$ to produce a mixture of $H_2S$ and $SO_2$ such that the molar ratio of $H_2S$ to $SO_2$ is approximately 2/1;

feeding said mixture of $H_2S$ and $SO_2$ to a second reactor;

contacting said mixture of $H_2S$ and $SO_2$ in said second reactor with a suitable catalyst, and at a suitable temperature, to form elemental sulfur; and

withdrawing said elemental sulfur from said second reactor.

2. The process of claim 1 wherein said coal is anthracite coal, the molar ratio of steam to $SO_2$ fed into said first reactor is between 1 and 6, the temperature of said first reactor is maintained between 1300° F and 1700° F.

3. The process of claim 1 wherein said coal is anthracite coal, the molar ratio of steam to $SO_2$ fed into said first reactor is between 2 and 4, the temperature of said first reactor is maintained between 1400° F and 1600° F.

4. A process for the reduction of $SO_2$ to elemental sulfur comprising the steps of:

feeding a mixture of steam and $SO_2$ into a first reactor, and contracting said mixture with coal, the molar ratio of steam to $SO_2$ fed into said first reactor, the temperature of said first reactor, being suitable for the production of a product having a molar ratio of $H_2S$ to $SO_2$ in excess of 2/1;

withdrawing elemental sulfur, $H_2S$, and $SO_2$ from said first reactor;

recovering said elemental sulfur·

adding to said $H_2S$ and $SO_2$ from said first reactor additonal $SO_2$ to produce a mixture of $H_2S$ and $SO_2$ such that the molar ratio of $H_2S$ to $SO_2$ is approximately 2/1;

feeding said mixture of $H_2S$ and $SO_2$ to a Claus converter;

withdrawing elemental sulfur from said Claus converter.

5. A process for the reduction of $SO_2$ to elemental sulfur comprising the steps of:

feeding a mixture of steam and $SO_2$ into a first reactor, and contacting said mixture with coal, the molar ratio of steam to $SO_2$ fed into said first reactor, the temperature of said first reactor being suitable for the production of a product having a molar ratio of $H_2S$ to $SO_2$ of approximately 2/1;

withdrawing elemental sulfur, and a mixture of $H_2S$ and $SO_2$ from said first reactor;

recovering said elemental sulfur;

feeding said mixture of $H_2S$ and $SO_2$ from said first reactor to a second reactor;

contacting said mixture of $H_2S$ and $SO_2$ in said second reactor with a suitable catalyst, and at a suitable temperature to form elemental sulfur; and

withdrawing said elemental sulfur from said second reactor.

6. The process of claim 4 wherein anthracite coal is used, the molar ratio of steam to $SO_2$ fed into said first reactor is between 1 and 6, the temperature of said first reactor is maintained between 1300° F and 1700° F.

7. The process of claim 4 wherein anthracite coal is used, the molar ratio of steam to $SO_2$ fed into said first reactor is between 2 and 4, the temperature of said first reactor is maintained between 1400° F and 1600° F.

8. A process for the reduction of $SO_2$ to elemental sulfur comprising the steps of:

feeding a mixture of steam and $SO_2$ into a first reactor, and contracting said mixture with coal, the molar ratio of steam to $SO_2$ fed into said first reactor, the temperature of said first reactor, being suitable for the production of a product having a molar ratio of $H_2S$ to $SO_2$ of approximately 2/1;

withdrawing elemental sulfur, and a mixture of $H_2S$ and $SO_2$ from said first reactor;

recovering said elemental sulfur;

feeding said mixture of $H_2S$ and $SO_2$ from said first reactor to a Claus converter;

withdrawing said elemental sulfur from said Claus converter.

0064355

FIG. 1

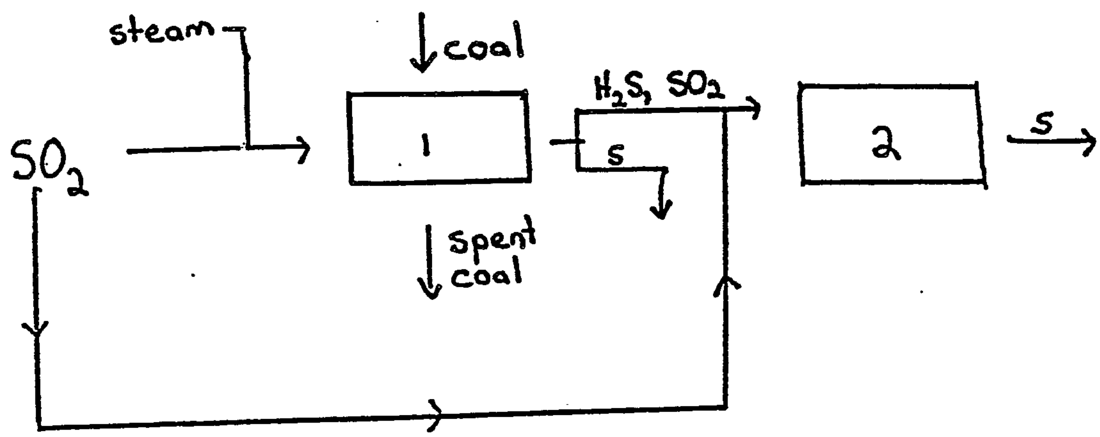


FIG. 2

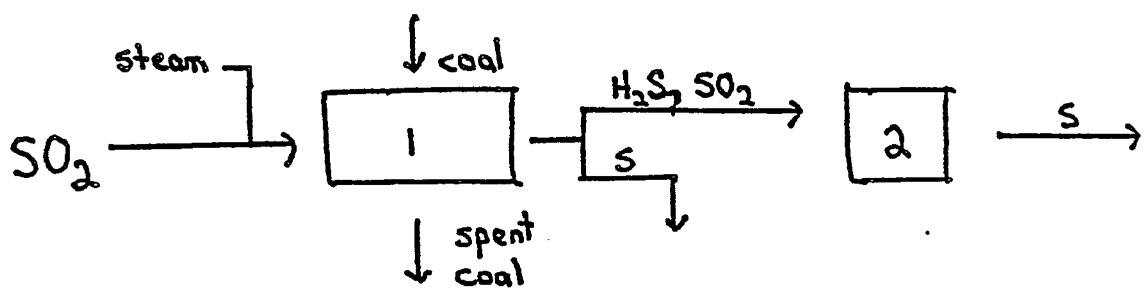

0064355

European Patent Office

# EUROPEAN SEARCH REPORT

Application number

EP 82 30 2020.1

| Category | Citation of document with indication, where appropriate, of relevant passages | Relevant to claim | CLASSIFICATION OF THE APPLICATION (Int. Cl. 3) |
|---|---|---|---|
| X | DE - A1 - 2 923 704 (BERGWERKSVERBAND)<br>* claim 1 *<br>-- | 1-8 | C 01 B 17/04 |
| A | DE - A1 - 3 029 112 (SUMITOMO HEAVY INDUSTRIES)<br>* claims 1 to 4 *<br>-- | | |
| A | FR - A - 760 064 (IMPERIAL CHEMICAL INDUSTRIES)<br>* page 1, column 2, lines 55 to 60; page 2, column 1, lines 1 to 20 *<br>-- | | TECHNICAL FIELDS SEARCHED (Int.Cl. 3) |
| A | FR - A - 825 289 (METALLGESELLSCHAFT AG)<br>* claim 1 *<br>-- | | C 01 B 17/00 |
| A | FR - A - 796 155 (SIEMENS-LURGI-COTTRELL ELEKTROFILTERGESELLSCHAFT)<br>-- | | |
| A | US - A - 2 213 787 (C. BARON VON GIRSEWALD et al.)<br>-- | | |
| D,A | US - A - 4 147 762 (P. STEINER)<br>-- | | CATEGORY OF CITED DOCUMENTS |
| D,A | US - A - 4 117 101 (J. FECHNER et al.)<br>---- | | |

CATEGORY OF CITED DOCUMENTS

X: particularly relevant if taken alone
Y: particularly relevant if combined with another document of the same category
A: technological background
O: non-written disclosure
P: intermediate document
T: theory or principle underlying the invention
E: earlier patent document, but published on, or after the filing date
D: document cited in the application
L: document cited for other reasons

&: member of the same patent family, corresponding document

X The present search report has been drawn up for all claims

| Place of search | Date of completion of the search | Examiner |
|---|---|---|
| Berlin | 24-06-1982 | ASSOGNA |